# EUROPÄISCHE PATENTANMELDUNG

(11) **EP 0 636 648 A1**
(43) Veröffentlichungstag der Anmeldung: **01.02.1995**
(21) Anmeldenummer: 94111135.3
(22) Anmeldetag: 18.07.1994
(51) Int. Cl.: C08K 9/04, C08K 9/08, C09C 3/08, C04B 35/628

(54) **Thermoplastische Formmassen**

(30) Priorität: 29.07.1993 DE 4325483
(71) Anmelder: BAYER AG, 51368 Leverkusen (DE)
(72) Erfinder: Huggins, John, Dr., D-51373 Leverkusen (DE)

(57) **Zusammenfassung**

Die vorliegende Erfindung betrifft neue thermoplastische Formmassen, enthaltend mindestens ein beschichtetes Keramikpulver und ein thermoplastisches Bindemittel, ein Verfahren zur Herstellung beschichteter Keramikpulver sowie ein Verfahren zur Herstellung von Formteilen aus Keramikpulvern.

## Beschreibung

Die vorliegende Erfindung betrifft eine neue thermoplastische Formmassen, enthaltend mindestens ein beschichtetes Keramikpulver und ein thermoplastisches Bindemittel, ein Verfahren zur Herstellung beschichteter Keramikpulver sowie ein Verfahren zur Herstellung von Formteilen aus Keramikpulvern.

Thermoplastische Formmassen finden unter anderem Anwendung bei Verfahren wie Spritzgießen, Extrudieren oder Warmpressen, bei denen ein temperaturabhängiges Fließverhalten notwendig ist.

Es ist bekannt, daß sinterfähige Keramikpulver zusammen mit thermoplastischen Bindemitteln zu Formmassen gemischt und durch Verfahren wie Spritzgießen, Extrudieren oder Warmpressen zu Formteilen verarbeitet werden können (M.J. Edirisinghe, J.R.G. Evans: Inter. J. High Technology Ceramics 2 (1986) 1-31; R.M. German "Powder Injection Molding" Princeton, New Yersey: Metal Powder Industries Federation, 1990).

Nach der Formgebung wird das Bindemittel aus dem Formteil entfernt. Das Entfernen des Bindemittels kann entweder bei Temperaturen zwischen 200 und 1000°C an der Luft oder in einer inerten Atmosphäre bzw. Vakuum thermisch geschehen. Das Bindemittel kann auch durch Extraktion mit Lösungsmittel oder superkritischen Gasen teilweise oder vollständig entfernt werden. Das Bindemittel kann auch durch Einwirken von gasförmigen Katalysatoren abgebaut und entfernt werden.

Anschließend wird das teilweise oder vollständig vom Bindemittel befreite Formteil in der Regel bei Temperaturen von mehr als 800°C gesintert, wobei eine teilweise oder vollständige Phasenumwandlung erfolgen kann und eine Verdichtung des Körpers stattfindet.

Um die Formteile fehlerfrei sintern zu können, müssen die Formmassen einen möglichst hohen Gehalt an keramischem Pulver von vorzugsweise 60 bis 70 Vol-% besitzen. Es ist jedoch allgemein bekannt, daß mit steigendem Pulvergehalt die Viskosität der Formmassen bei der Verarbeitungstemperatur ebenfalls ansteigt. Der Viskositätsanstieg ist bei feinen Pulvern besonders ausgeprägt.

Das Spritzgießen von Formmassen hoher Verarbeitungsviskositäten hat mehrere Nachteile. Formmassen hoher Viskosität können komplizierte oder dünnwandige Formen sowie Formen mit langen Fließwegen nur schlecht füllen. Formmassen hoher Viskosität benötigen einen hohen Einspritz- bzw. Nachdruck beim Spritzgießen. Dabei werden Formteile mit inhomogenen Dichten sowie mit hohen inneren Spannungen erzeugt, die nach dem Sintern Fehler aufweisen. Formmassen hoher Viskosität führen zu mehr Abrieb an Maschinenteilen und dadurch zu Verunreinigungen im Formteil und zu höheren Wartungskosten. Formmassen hoher Viskosität sind nur bedingt replastifizierbar, da beim Spritzgießen durch Schererwärmung die Fließeigenschaften der Formmassen irreversibel geändert werden können. Das Replastifizieren der Formmasse ist gewünscht, um Angußteile sowie beschädigte Formteile verwerten zu können. Dadurch entsteht der Wunsch der Technik nach thermoplastischen Formmassen mit hohem Pulvergehalt und niedriger Verarbeitungsviskosität.

Nach dem Stand der Technik wird die Verarbeitungsviskosität hochgefüllter Formmassen hauptsächlich durch Auswahl des thermoplastischen Bindemittels beeinflußt. Daher werden niedermolekulare Wachse oft empfohlen (M.A. Strivens, Am. Ceram. Soc. Bull. 42(1) (1963) 13-19). Die Viskosität der Formmassen wird auch durch Zusatzmittel wie Natriumstearat oder Stearinsäure sowie Weichmacher reduziert (C.L. Quackenbush, K. French, J.T. Niel, Ceramic Eng. Sci. Proc. 3 (1982) 20-34). Die Partikelgrößenverteilung, die Kornform und die Dichte des Pulvers haben auch einen Einfluß auf die Viskosität der Formmassen (J.A. Mangels und R.M. Williams, Am. Ceram. Soc. Bull. 62(5) (1983) 601-606).

Aufgabe der vorliegenden Erfindung war die Bereitstellung einer neuen thermoplastischen Formmasse, die sich insbesondere zur Herstellung von Formteilen aus Keramikpulver eignet.

Es wurde nun gefunden, daß Keramikpulver, die mit organischen oder organometallischen Dispergatoren beschichtet sind, eine thermoplastische Formmasse mit besonders niedriger Verarbeitungsviskosität bilden. Diese Formmasse weist trotz hoher Gehalte an Keramikpulvern noch eine gute Verarbeitungseigenschaften auf. Überraschenderweise ist die Viskosität der erfindungsgemäßen Formmasse nicht nur deutlich niedriger als die Viskosität vergleichbarer Formmassen aus unbeschichteten Pulvern sondern auch deutlich niedriger als die Viskosität von Formmassen aus unbeschichteten Pulvern, denen die erfindungsgemäßen Dispergatoren nachträglich beigemischt wurden.

Gegenstand der vorliegenden Erfindung ist eine thermoplastische Formmasse, enthaltend mindestens ein beschichtetes Keramikpulver und mindestens ein thermoplastisches Bindemittel. Zusätzlich kann die erfindungsgemäße Formmasse andere Hilfsstoffe wie Sinterhilfsmittel, Fließ- und Trennhilfsmittel enthalten.

In einer weiteren Ausführungsform der vorliegenden Erfindung enthält die thermoplastische Formmasse vorzugsweise zusätzlich zu dem beschichteten Keramikpulver und dem thermoplastischen Bindemittel noch Siliconharze.

Die erfindungsgemäße Formmasse kann auch zusätzlich nicht-beschichtetes Pulver enthalten, soweit dieses keine wesentliche Verschlechterung der Verarbeitungseigenschaften bewirkt.

Erfindungsgemäß einsetzbar sind ionische, nicht-ionische und/oder zwitterionische Dispergatoren. Geeignet sind alle organischen und organometallischen Dispergatoren, die mindestens eine hydrophile und mindestens eine hydrophobe Gruppe enthalten. In der erfindungsgemäßen Formmasse ist der Dispergator vorzugsweise ein organisches Polymer mit einer Vielzahl an hydrophilen Gruppen. Beispiele sind Polyacrylate, Polyethylenvinylalkohol-Copolymere, teilverseifte Polyethylenacrylsäure-Copolymere sowie Cellulose-Derivate und deren Alkalimetallsalze. Die erfindungsgemäßen Dispergatoren können sowohl molekularer als auch polymerer Art sein.

Die erfindungsgemäße thermoplastische Formmasse enthält als Dispergator vorzugsweise mindestens einen C₄- bis C₄₀-aliphatischen Rest. Besonders bevorzugt sind Dispergatoren mit überwiegend linearen aliphatischen Resten. Die bevorzugten aliphatischen Reste können auch Heteroatome, z.B. Ether-, Keto- oder Hydroxy-Gruppen, sowie Kohlenstoff-Kohlenstoff-Mehrfachbindungen enthalten. Beispiele sind 2-Ethylhexyl-, Decyl-, Dodecyl-, Oleyl- und Octadecyl-Gruppen.

Die hydrophoben organischen Gruppen werden über chemische Bindungen an hydrophile Gruppen oder Polymere gebunden. Bevorzugte hydrophile Gruppen sind Carbonsäuren und deren Salze, Sulfonsäuren und deren Salze, Sulfate und deren Salze, Phosphonsäureester und deren Salze, Amine, Aminoxide und Ammoniumsalze, sowie Polyalkohole oder Aminoalkohole wie Sorbit, Glycerin, Ethanolamin und dergleichen, und hydrophile Polymere wie Polyether, Polyvinylalkohol und dergleichen.

Die Dispergatoren können auch hydrophobe Organofluorreste enthalten.

Die Dispergatoren können auch hydrophobe Organosiliciumreste sowie Polysiloxane enthalten.

Beispiele der nicht-ionischen Dispergatoren sind Polyethylenoxidderivate von Alkylphenolen, aliphatischen Alkoholen und aliphatischen Carbonsäuren sowie Polyethylenoxidderivate von Fettsäureestern mit Polyalkoholen wie Glycerin, Sorbitol und dergleichen, Fettsäurederivate von Alkoholaminen wie Diethanolamin und dergleichen, und Polyetherpolysiloxan-Copolymere.

In einer bevorzugten Ausführungsform der vorliegenden Erfindung ist der ionische Dispergator das Salz eines anionischen Dispergators und eines einwertigen Kations.

Beispiele ionischer bzw. ionisierbarer Dispergatoren sind Carbonsäuren und deren Salze, wie Stearinsäure, Natriumstearat und Natrium-N-Lauroylsarcoside, teilverseifte acylierte Polypeptide, Alkyl- und Alkylbenzolsulfonsäuren und deren Salze wie Dodecylbenzolsulfonsäuresalze, N-Acyl- oder N-Methyltaurinsalze und Sulfosuccinatestersalze, sulfonierte Alkohole, Polyethylenoxidderivate langkettiger Alkohole und deren Salze wie Natriumlaurylsulfate und dergleichen, Phosphorsäure- und Polyphosphorsäurepartiellester und deren Salze wie Phosphorsäuredioctylester, Phosphonobutantricarbonsäure und dessen Carbonsäureester und dergleichen, Salze der Phosphonocarbonsäure und -ester, Salze der Phosphonsäure, Perfluoralkylcarbonsäuren und deren Salze und langkettige Amine, Diamine, Polyamine und Aminoxide. Bevorzugte ionische Dispergatoren sind Alkalimetallsalze sulfonierter Alkohole sowie von Phosphorsäuremono- und diestern.

In einer bevorzugten Ausführungsform der vorliegenden Erfindung entspricht der ionischen Dispergator mindestens einem Salz des Phosphorsäureesters der Formel 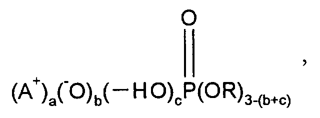
wobei
- a und b: zwischen 0,5 und 1,5 liegt,
- b+c: 1,0 bis 2,0 ist,
- A⁺: ein einwertiges Kation, wie beispielsweise ein Natrium-, Kalium-, Ammoniumion und
- R: ein geradkettiger oder verzweigter Alkylrest mit 4 bis 22 C-Atomen ist.

Beispiele für die erfindungsgemäßen Salze der Phosphorsäureester sind 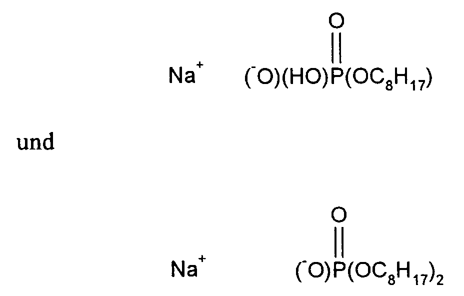
sowie deren Gemische. Besonders bevorzugt sind Salze der Phosphorsäuremonoester.

In einer weiteren bevorzugten Ausführungsform entspricht der ionische Dispergator einem Salz des Phosphonocarbonsäureesters der Formel 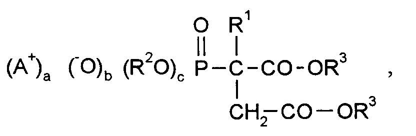
wobei
- a und b: zwischen 0,5 und 1,5 liegt,
- c: = 2 - b ist,
- A⁺: ein einwertiges Kation, wie beispielsweise ein Natrium-, Kalium-, oder Ammoniumion ist,
- R¹: ein Wasserstoff- oder geradkettiges oder verzweigter, gegebenenfalls substituierter Alkylrest mit 1 bis 26 C-Atomen und
- R² und R³: unabhängig voneinander Wasserstoff- oder ein geradkettiger oder verzweigter Alkylrest mit 1 bis 22 C-Atomen sind.

Beispiele der erfindungsgemäßen Salze der Phosphonocarbonsäureester sind 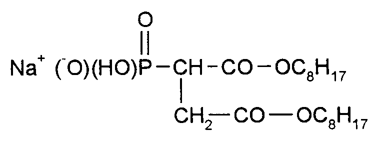
sowie 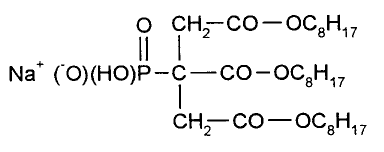
In einer weiteren Ausführungsform der vorliegenden Erfindung ist der ionische Dispergator vorzugsweise ein Salz der Phosphonsäure der Formel 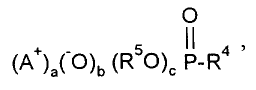
wobei
- a und b: = 0,5 bis 1,5 sind,
- c: = 2 - b ist,
- A⁺: ein einwertiges Kation, wie beispielsweise ein Natrium-, Kalium-, Ammoniumion und dergleichen, ist,
- R⁴: ein geradkettiger oder verzweigter Alkylrest mit 4 bis 22 C-Atomen, und
- R⁵: ein Wasserstoff- oder geradkettiger oder verzweigter Alkylrest mit 1 bis 22 C-Atomen ist.

Beispiele für die erfindungsgemäßen Salze der Phosphonocarbonsäureester sind 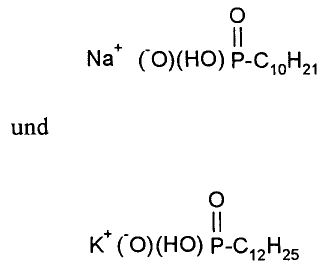
Beispiele für kationische Dispergatoren sind Salze von langkettigen Aminen, Diaminen und Polyaminen, Quartinärammoniumsalze wie N-Alkyltrimethylammonium und N-Benzyl-N-alkyldimethylammoniumsalze, Quartinärammoniumderivate von Polyethylenoxidalkylaminen und Quartinärammoniumsalze von Carbonsäuren, Alkyl- und Alkylbenzolsulfonsäuren, sulfonierte Alkohole, Phosphorsäure- und Polyphosphorsäureester und dergleichen.

Beispiele für zwitterionische Dispergatoren sind aliphatische Derivate von Aminosäuren bzw. Aminosulfate wie N-Alkylaminopropansäure, N-Alkyl-β-iminodipropansäure, Imidazolincarbonsäure, N-Alkylbetaine, N-Alkylsulfobetaine und dergleichen.

Geeignete Dispergatoren sind unter den Handelsnamen BRIJ, SPAN, MYRJ und TWEEN der ICI Specialty Chemicals, TRITON und TERGITOL der Union Carbide Chemicals, ACLYN Polymere der Allied Chemicals, MARLOPHOR der Hüls AG und TEGO der Goldschmidt AG erhältlich.

Keramische Pulver im Sinne der Erfindung sind alle Pulver, wie Oxidkeramik oder nicht-oxidische Keramik bzw. deren Rohstoffe zur Herstellung derselben, einschließlich mineralische Rohstoffe zur Herstellung von Keramik, die zu einem festen Körper gesintert werden können.

Beispiele von bevorzugter Oxidkeramik sind Al₂O₃, MgO, ZrO₂, Al₂TiO₅ und Silikatkeramik wie Porzellan- und Steinzeugmischungen, die unter anderem Ton, Feldspat und Quarz enthalten können. Beispiele von nicht-oxidischer Keramik sind SiC und Si₃N₄. Die Pulver können allein oder auch als Gemisch verschiedener Pulver eingesetzt werden.

Ist das erfindungsgemäß beschichtete Keramikpulver ein tonhaltiges Pulver, so ist dieses bevorzugt ein mit den Salzen anionischer Dispergatoren und einwertigen Kationen beschichtetes Pulver. Besonders bevorzugt ist dabei eine Formmasse aus mindestens einem tonhaltigen Pulver, das mit dem Alkalisalz von Phosphorsäureestern, Phosphonocarbonsäureestern oder Phosphonsäuren beschichtet ist.

Im allgemeinen werden je nach Keramik unterschiedliche Sinterhilfsmittel zugesetzt, die beim Sintern der Formteile durch Bildung von niedrigschmelzenden Phasen die Phasenumwandlung bzw. Verdichtung beschleunigen.

Die erfindungsgemäßen thermoplastischen Bindemittel bestehen aus thermoplastischen Polymeren und Wachsen auf organischer Basis und Hilfsstoffen. Bevorzugt sind Bindemittel, die im Gemisch eine Erweichungstemperatur zwischen 40 und 200°C, besonders bevorzugt zwischen 50 und 150°C, aufweisen. Beispiele für bevorzugte thermoplastische Polymere sind Polyethylene, Polypropylen, Polystyrol, Polyacrylate, Polyester und Ethylenvinylacetat-Copolymere. Bevorzugt werden auch Wachse aus mineralischen oder natürlichen Vorkommen, wie Paraffinwachse, Montanwachs, Bienenwachs oder Pflanzenwachse und deren Folgeprodukte.

Synthetische Wachse nicht-polymerer Art, wie Stearinsäureamid, Ethylendiamin-bis-stearat und Stearinsäureethylester, sind ebenfalls bevorzugt.

Die erfindungsgemäßen Hilfsstoffe sind Stoffe, die eine Verbesserung der Verarbeitungseigenschaften bewirken, wie Weichmacher und Trennhilfsstoffe. Trennhilfsstoffe können zum Beispiel eine saubere und einfache Entformung gewährleisten. Beispiele sind aliphatische Fettsäuren und deren Salze, wie Stearinsäure, Natriumstearat, Magnesiumstearat oder dergleichen sowie Öle wie Paraffinöl, Polydimethylsiloxane, Polymethylphenylsiloxane, Polyethylenoxid, Polypropylenoxid und Polyetherpolysiloxan-Copolymere. Beispiele für Weichmacher sind aliphatische Ester von Phthalinsäure, Adipinsäure oder Phosphorsäure.

Die erfindungsgemäßen thermoplastischen Bindemittel können auch zusätzliche Mengen an Dispergatoren enthalten.

Die erfindungsgemäßen Siliconharze sind vorzugsweise Polyorganosiloxane, die eine mehrfach verzweigte Struktur aufweisen. Außerdem sind thermoplastische Siliconharze bzw. Siliconharzgemische mit einer Erweichungstemperatur zwischen 30 und 200°C, insbesondere zwischen 40 und 130°C bevorzugt. Besonders bevorzugt sind thermoplastische Siliconharze, die eine Keramikausbeute (definiert als der Rest nach der Pyrolyse bis 1000°C an der Luft) von mindestens 60 Gew.-% aufweisen. Ganz besonders bevorzugt sind Siliconharze bzw. Siliconharzgemische mit der durchschnittlichen Formel

R¹ₐSi(OH)_{b}(OR²)_{c}O_{(4-a-b-c)/2}

wobei
die Summe (a+b+c) 1,05 bis 1,5 beträgt,
- a: zwischen 1,0 und 1,25 ist,
- R¹: einen oder mehrere der Reste H, C₁- bis C₁₈-Alkyl, Vinyl oder Phenyl bezeichnet, und
- R²: einen oder mehrere der organischen Reste C₁- bis C₁₈-Alkyl bezeichnet.

Besonders bevorzugt sind Siliconharze der obigen Formel, wobei R¹ mindestens 80 % Methylgruppen neben Phenylgruppen sind. Weniger bevorzugt sind Siliconharze, die flüssig sind oder keinen Erweichungspunkt aufweisen.

Ein Vorteil der erfindungsgemäßen Formmasse ist, daß sie ohne Lösungsmittel verarbeitbar ist. Vorzugsweise enthält die erfindungsgemäße Formmasse daher keine Lösungsmittel.

Gegenstand der vorliegenden Erfindung ist auch ein Verfahren zur Herstellung beschichteter, als Bestandteil von den erfindungsgemäßen thermoplastischen Formmassen geeigneter Keramikpulver, wonach eine Suspension des Keramikpulvers in einer polaren Flüssigkeit mit mindestens einem ionischen, nicht-ionischen oder zwitterionischen Dispergator auf organischer oder organometallischer Basis gemischt und anschließend getrocknet wird. Geeignete polare Flüssigkeiten sind z.B. Wasser und polare organische Flüssigkeiten, wie z.B. Methanol, Ethanol, Aceton und dergleichen, sowie Gemische polarer und unpolarer organischer Flüssigkeiten. Superkritische Gase wie CO₂ und dergleichen sind auch polare Flüssigkeiten. Bevorzugt wird Wasser als polare Flüssigkeit.

Die polare Flüssigkeit wird vorzugsweise anschließend entfernt bzw. verdampft, beispielsweise durch Sprühtrocknen. Die Suspension des beschichteten Pulvers kann aber auch zur Herstellung der thermoplastischen Formmassen direkt eingesetzt werden, wobei die polare Flüssigkeit nach dem Mischen mit dem Bindemittel verdampft wird.

Zur Herstellung der erfindungsgemäß beschichteten Pulver in einer wäßrigen Suspension können zusätzlich Verflüssiger zugesetzt werden. Verflüssiger sind Hilfsstoffe, die eine Erniedrigung der Viskosität einer wäßrigen Suspension von keramischen Pulvern bewirken. Viele der erfindungsgemäßen Dispergatoren sind ebenfalls Verflüssiger für wäßrige Suspensionen. Andere der erfindungsgemäßen Dispergatoren bewirken eine Erhöhung der Viskosität im wäßrigen Medium. Viele bekannte Verflüssiger wie Natriumsilikat, Polyphosphate und dergleichen bewirken in thermoplatischen Formmassen keinen viskositätserniedrigenden Effekt.

In einer Ausführungsform des erfindungsgemäßen Verfahrens zur Herstellung beschichteter Keramikpulver wird die wäßrige Suspension des Keramikpulvers vorzugsweise mit einer wäßrigen Lösung oder Emulsion des Dispergators vermischt und anschließend getrocknet. Auch bevorzugt ist die Verwendung von Lösungen in wassermischbaren organischen Flüssigkeiten, wie Aceton oder Ethanol. Zur Herstellung von Emulsionen der wasserunlöslichen erfindungsgemäßen Dispergatoren sind je nach Struktur zusätzlich geringe Mengen an Emulgatoren notwendig. Bevorzugte Emulgatoren sind erfindungsgemäß einsetzbare Dispergatoren, die wasserlöslich sind. Besonders bevorzugt sind Emulsionen erfindungsgemäß einsetzbarer wasserunlöslicher Dispergatoren in Mischung mit Polyether-haltigen Emulgatoren. Ganz besonders bevorzugt sind Polyether-haltige Emulgatoren mit HLB-Werten (hydrophilic-lypophilic balance) von mehr als 10.

Dispergatoren, die oberhalb 20°C schmelzen, werden bevorzugt bei erhöhter Temperatur in Wasser gelöst bzw. zu einer Emulsion verarbeitet, und auch bei erhöhter Temperatur mit der wäßrigen Suspension des Pulvers vermischt.

In einer weiteren Ausführungsform des erfindungsgemäßen Verfahrens zur Herstellung beschichteter, als Bestandteil von den erfindungsgemäßen thermoplastischen Formmassen geeigneter Keramikpulver wird der Dispergator beim Mahlen des Keramikpulvers zugesetzt. Das Mahlen der Pulver kann trocken oder naß erfolgen.

Die erfindungsgemäße thermoplastische Formmasse enthält vorzugsweise neben dem beschichteten Keramikpulver mindestens soviel Bindemittel, Siliconharz und Hilfsstoffe, wie notwendig ist, um eine thermoplastisch verarbeitbare Masse zu erhalten. In der Regel müssen Bindemittel zusammen mit Siliconharz und Hilfsstoffe mindestens das freie Volumen zwischen den Pulverpartikeln im Formteil ausfüllen. Je nach Pulverdichte sowie deren Kornform und Korngrößenverteilung sind dafür unterschiedliche Mengen notwendig. Erfahrungsgemäß sind 30 bis 50 Vol.-% Bindemittel, Siliconharz und Hilfsstoffe notwendig. Besonders bevorzugt ist eine Formmasse mit mindestens 60 Vol.-% keramischem Pulver.

Die erfindungsgemäße thermoplastische Formmasse werden durch Mischen der genannten Komponenten bei einer Temperatur oberhalb der Erweichungstemperatur des Bindemittels hergestellt, wobei gegebenenfalls restliches Lösungsmittel aus der Siliconharzherstellung entfernt wird. Es ist vorteilhaft, beim Mischen hohe Scherkräfte anzuwenden, um Pulveraggregate zu zerkleinern und dadurch eine homogene Mischung zu erhalten. Geeignete Mischaggregate sind zum Beispiel Kneter, Extruder oder Walzwerke. Die Formmasse kann dann entweder direkt verwendet werden oder zuerst zu Pulvern oder Granulaten verarbeitet werden.

Die erfindungsgemäße thermoplastische Formmasse besitzt ausgezeichnete Eigenschaften für die thermoplastische Formgebung, wie zum Beispiel durch Spritzgießen, Extrudieren oder Warmpressen. Formmassen, die die erfindungsgemäß beschichteten Pulver enthalten, sind von niedrigerer Viskosität bei der Verarbeitungstemperatur als Formmassen, die unbeschichtete Pulver enthalten. Die niedrigere Viskosität der erfindungsgemäßen Formmasse führt zu verbesserten Verarbeitungseigenschaften, wie niedrigeren Einspritzdruck und weniger Abrieb. Andernfalls kann die erfindungsgemäßen Formmasse bei gleicher Viskosität mehr Keramikpulver enthalten.

Gegenstand der vorliegenden Erfindung ist auch ein Verfahren zur Herstellung von Keramik-Formkörpern durch Vermischen mindestens eines keramischen Pulvers mit thermoplastischen Bindemitteln, (thermo)plastischem Verformen der erhaltenen Masse, wobei das keramische Pulver vor dem Vermischen mit dem thermoplastischen Bindemittel mit Dispergatorsubstanzen behandelt wird.

Die mit den erfindungsgemäßen Formmassen hergestellten Formteile sind von hoher Qualität und können mit großer Sicherheit zu fehlerfreien dichten Körpern gesintert werden.

Die Erfindung wird anhand der folgenden Beispiele weiter beschrieben.

### Beispiele

Die folgenden Substanzen wurden in den Beispielen eingesetzt:

### Porzellanpulver

eine Rohstoffmischung zur Herstellung von Hartporzellan, bestehend aus etwa 50 % Kaolin und etwa 50 % Feldspat und Quarz, mit einer mittleren Korngröße von 4 bis 5 Mikron, einer Dichte von 2,62 g/cm³ und einem Glühverlust von 7,0 Gew.-%. Das Pulver enthält 0,35 Gew.-% Natriumsilikat als Verflüssiger.

### Montanwachs

der Firma Hoechst AG, mit der Bezeichnung Hoechst-Wachs-E und einem Tropfpunkt von 79 bis 85°C, einer Säurezahl von 15 bis 20 mg KOH/g, einer Verseifungszahl von 130 bis 160 mg KOH/g, einer Dichte von 1,01 g/cm³ und einer Viskosität bei 100°C von etwa 30 mPa.s.

### Polyethylenwachs AC8 bzw. AC1702

zwei Polyethylenwachse der Firma Allied Corporation mit der Bezeichnung A-C Additive 8, einem Tropfpunkt von 116°C, einer Dichte von 0,93 g/cm³ und einer Viskosität bei 140°C von etwa 400 mPas bzw. der Bezeichnung A-C Additive 1702, einem Tropfpunkt von 92°C, einer Dichte von 0,88 g/cm³ und einer Viskosität bei 140°C von etwa 40 mPas.

### Copolymerwachs

ein Ethylen-Vinylacetat-Copolymer der Firma Allied-Corporation mit der Bezeichnung A-C Additive 400, einem Tropfpunkt von 95°C, einer Dichte von 0,92 g/cm³ und einer Viskosität bei 140°C von etwa 600 mPas.

### EVA-Copolymer

ein hochmolekulares Ethylenvinylacetat-Copolymer der Firma BP Chemicals mit der Bezeichnung NOVEX V10 H430, einer Dichte von 0,928 g/cm³ und einem Schmelzindex von 2,0 (ISO 1133, Bedingung 4).

### Stearinsäureamid

bezogen von der Firma Unichem mit der Bezeichnung Uniwax amid 1750, einer Dichte von 0,95 g/cm³ und einem Schmelzpunkt von 98 bis 104°C.

### Siliconharzlösung

eine 50 %ige Lösung in Xylol eines Siliconharzes, enthaltend Methyl-, Dimethyl- und Trimethylsiloxygruppen mit im Durchschnitt 1,15 Methylgruppen pro Siliciumatom, einer Erweichungstemperatur von 55 bis 65°C, einer Dichte von 1,18 g/cm³ und einer Keramikausbeute nach der Pyrolyse bis 1000°C an der Luft von 76 Gew.-%.

### TWEEN 65

ein Polyethylenoxid(20)-Sorbitan-tristearat der Firma ICI Specialty Chemicals mit einem HLB-Wert von 10,5.

### ACLYN 285 A

ein teilverseiftes Polyethylenacrylsäure-Copolymer mit 1,7 mmol Na/g.

### Beispiel 1

Zu 500 g entionisiertem Wasser wurden 1000 g Porzellanpulver nach und nach zugemischt, um eine dickflüssige Suspension herzustellen. Die Suspension wurde 30 Minuten gerührt. Anschließend wurden unter ständigem Rühren 2,5 g Phosphorsäuredioctylester (DOP), gelöst in 25 ml Aceton, über 15 Minuten zugetropft. Die Suspension wurde auf einem Blech ausgebreitet und 10 h bei 50°C und 3 h bei 110°C an der Luft getrocknet.

### Beispiel 2

Eine Suspension von 1000 g Porzellanpulver in 500 g Wasser wurde wie in Beispiel 1 hergestellt. Anschließend wurde die Suspension auf 80°C erwärmt und unter ständigem Rühren 2,5 g TWEEN 65, gelöst in 25 ml warmem Wasser, über 15 Minuten zugetropft. Die Mischung wurde anschließend 30 Minuten bei 80°C gerührt. Die Suspension wurde auf einem flachen Blech ausgebreitet und 10 h bei 50°C und 3 h bei 110°C an der Luft getrocknet.

### Beispiel 3

Porzellanpulver wurde wie in Beispiel 2 bei 80°C mit 0,25 Gew.-% ACLYN 285 A, gelöst in 25 ml warmem Wasser, vermischt und getrocknet.

### Beispiel 4

In einem Z-Kneter wurden bei 120°C 13 g Montanwachs, 13 g Polyethylenwachs AC8, 6,5 g Stearinsäureamid und 65 g einer 50 %igen Siliconharzlösung in Xylol 15 Minuten vermischt. Anschließend wurde 15 Minuten mit N₂ durchleitet und 10 Minuten Vakuum angelegt um das Xylol zu entfernen. Das Gemisch wurde dann 10 Minuten mit 281 g Porzellanpulver mit 0,25 Gew.-% Phosphorsäuredioctylester aus Beispiel 1 geknetet. Anschließend wurde die Masse 10 Minuten bei 130°C auf einem Zweiwalzenstuhl homogenisiert.

Die Formmasse war optisch homogen, hellgrau und hatte eine Erweichungstemperatur nach DSC von 60 bis 110°C. Die Formmasse enthielt etwa 63,5 Vol.-% Porzellanpulver. Die Viskosität der Formmasse (Göttfert Kapillarrheometer) bei 130°C war 840 Pa.s bei einer Schergeschwindigkeit von 100/s.

### Beispiel 5

Eine Formmasse wurde wie in Beispiel 4 aus 13 g Montanwachs, 13 g Polyethylenwachs AC8, 6,5 g Stearinsäureamid, 65 g 50 %iger Siliconharzlösung und 282 g Porzellanpulver mit 0,25 Gew.-% TWEEN 65 aus Beispiel 2 hergestellt.

Die Formmasse hatte eine Viskosität bei 130°C von 720 Pa.s bei einer Schergeschwindigkeit von 100/s.

### Beispiel 6

Eine Formmasse wurde wie in Beispiel 4 aus 13 g Montanwachs, 13 g Polyethylenwachs AC8, 6,5 g Stearinsäureamid, 65 g 50 %iger Siliconharzlösung und 282 g Porzellanpulver mit 0,25 Gew.-% ACLYN 285 aus Beispiel 3 hergestellt.

Die Formmasse hatte eine Viskosität bei 130°C von 730 Pa.s bei einer Schergeschwindigkeit von 100/s.

### Beispiel 7 (Vergleichsbeispiel)

Eine Formmasse wurde, wie in Beispiel 4, aus 13 g Montanwachs, 13 g Polyethylenwachs AC8, 6,5 g Stearinsäureamid und 65 g Siliconharzlösung, aber mit 282 g unbeschichtetem Porzellanpulver hergestellt. Die Viskosität der Formmasse betrug 1240 Pa.s bei 130°C und einer Schergeschwindigkeit von 100/s.

### Beispiele 8-10

Formmassen wurden, wie in Beispiel 4, aus 13 g Montanwachs, 13 g Polyethylenwachs AC8, 3,9 g Stearinsäureamid, 65 g 50 %iger Siliconharzlösung und 2,6 g eines Dispergators sowie 282 g unbeschichtetem Porzellanpulver hergestellt. Die Ergebnisse sind in der Tabelle 1 dargestellt.

**Tabelle 1**

| Viskosität der Formmassen bei 130°C | | | |
|---|---|---|---|
| Beispiel | Pulverbeschichtung | Bindemittel-Additiv | Viskosität^{a} Pas |
| 4 | 0,25 % DOP^{b} | ohne | 840 |
| 5 | 0,25 % TWEEN 65 | ohne | 720 |
| 6 | 0,25 % ACLYN 285 | ohne | 730 |
| 7 | ohne | ohne | 1240 |
| 8 | ohne | 4 % DOP | 1300 |
| 9 | ohne | 4 % TWEEN 65 | 1030 |
| 10 | ohne | 4 % ACLYN 285 | 1280 |

| | | | |
|---|---|---|---|
| ^{a}bei 100/s; | | | |
| ^{b}DOP = Phosphorsäuredioctylester | | | |

### Beispiel 11

Eine Formmasse wurde wie in Beispiel 4 aus 10,4 g Polyethylenwachs AC 1702, 10,4 g Copolymerwachs, 15,6 g EVA-Copolymer, 18,25 g Stearinsäureamid, 10,4 g Octadecanol und 335 g Porzellanpulver mit 0,25 Gew.-% TWEEN 65 aus Beispiel 2 hergestellt.

Die Formmasse hat einen berechneten Pulvergehalt von 64 Vol-%. Die Viskosität der Formmasse betrug bei 130°C 1250 Pas bei einer Schergeschwindigkeit von 100 1/s und 492 Pas bei 500 1/s.

### Beispiel 12

Eine Formmassse wurde wie in Beispiel 11 aber mit 335 g unbeschichtetem Porzellanpulver hergestellt. Die Viskosität der Formmasse betrug 2005 Pas bei 130°C und einer Schergeschwindigkeit von 100 1/s sowie 710 Pas bei 500 1/s.

### Beispiel 13

Zu 500 g entionisiertem Wasser wurden 1000 g Porzellanpulver nach und nach zugemischt, um eine dickflüssige Suspension herzustellen. Die Suspension wurde 30 Minuten gerührt. Anschließend wurden unter ständigem Rühren 5,0 g Natrium-Phosphorsäuredioktylester (Na-DOP), gelöst in 100 ml entionisiertem Wasser, über von 15 Minuten zugetropft. Die Mischung wurde 30 Minuten gerührt und dann auf einem Blech ausgebreitet. Anschließend wurde das Pulver 10 h bei 50°C und 3 h bei 110°C an der Luft getrocknet.

### Beispiele 14 bis 19

Formmassen wurden aus 65 g eines Bindemittels, das aus Stearinsäureamid, Montanwachs, EVA-Copolymer sowie 50 Gew.-% Siliconharz und 2 Gew.-% Octadecanol besteht, und 277 g eines Porzellanpulvers, das wie in Beispiel 13 mit einem Dispergator beschichtet wurde, hergestellt. Die Viskosität der Formmassen aus Pulvern mit verschiedenen Dispergatoren sind in Tabelle 2 dargestellt. Die Viskosität einer Formmasse aus unbeschichtetem Pulver wird als Vergleichsbeispiel auch angegeben.

**Tabelle 2**

| Viskosität der Formmassen bei 130°C | | |
|---|---|---|
| Beispiel | Pulverbeschichtung | Viskosität^{a} Pa·s |
| 14 | keine | 6670 |
| 15 | 0,5 % TWEEN 65 | 5370 |
| 16 | 0,5 % ACLYN 285 | 5570 |
| 17 | 0,5 % Na-DOP^{b} | 3580 |
| 18 | 0,5 % Na-TOPBS^{c} | 3520 |
| 19 | 0,5 % Na-IDEPA^{d} | 2030 |

| | | |
|---|---|---|
| ^{a}bei 100 1/s; | | |
| ^{b}Na-DOP = Phosphorsäuredioktylester Natriumsalz; | | |
| ^{c}Phosphonobutan-1,2,4-tricarbonsäuretrioktylester Natriumsalz; | | |
| ^{d}Phosphorsäuremonoisodecylester Natriumsalz | | |

### Beispiele 20 bis 23

Formmassen wurden aus 60 g eines Bindemittels, das aus Stearinsäureamid, Paraffinwachs, EVA-Copolymer und 30 Gew.-% Siliconharz besteht, und 273 g eines Porzellanpulvers, das wie in Beispiel 13 mit einem Dispergator beschichtet wurde, hergestellt. Die Viskosität der Formmassen aus Pulvern mit verschiedenen Dispergatoren sind in Tabelle 3 dargestellt. Die Viskosität einer Formmasse aus unbeschichtetem Pulver wird als Vergleichsbeispiel auch angegeben.

**Tabelle 3**

| Viskosität der Formmassen bei 130°C | | |
|---|---|---|
| Beispiel | Pulverbeschichtung | Viskosität^{a} Pa·s |
| 20 | keine | 13060 |
| 21 | 0,5 % K-IDEPA^{b} | 6150 |
| 22 | 0,5 % Na-MOPA^{c} | 5208 |
| 23 | 0,5 % K-IDEPA/DOP^{d} | 6530 |

| | | |
|---|---|---|
| ^{a}bei 100 1/s; | | |
| ^{b}Phosphorsäuremonoisodecylester Kaliumsalz; | | |
| ^{c}Phosphorsäuremonooktylester Natriumsalz; | | |
| ^{d}1:1 Gemisch | | |

## Patentansprüche

1. Thermoplastische Formmasse, enthaltend mindestens ein beschichtetes Keramikpulver und mindestens ein thermoplastisches Bindemittel, dadurch gekennzeichnet, daß das Keramikpulver mit einem oder mehreren ionischen, nicht-ionischen oder zwitterionischen Dispergatoren auf organischer oder organometallischer Basis beschichtet ist.

2. Thermoplastische Formmasse nach Anspruch 1, enthaltend zusätzlich mindestens ein Siliconharz.

3. Thermoplastische Formmasse nach einem der Ansprüche 1 oder 2, dadurch gekennzeichnet, daß der Dispergator mindestens einen C₄- bis C₄₀-aliphatischen Rest enthält.

4. Thermoplastische Formmasse nach einem der Ansprüche 1 oder 2, dadurch gekennzeichnet, daß der Dispergator ein organisches Polymer mit einer Mehrzahl an hydrophilen Gruppen ist.

5. Thermoplastische Formmasse nach einem der Ansprüche 1 bis 4, dadurch gekennzeichnet, daß der ionische Dispergator mindestens einem Salz des Phosphorsäureesters der Formel 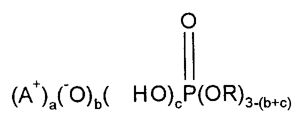 entspricht,
wobei
a und b zwischen 0,5 und 1,5 liegt,
b + c zwischen 1,0 bis 2,0 ist,
A⁺ ein einwertiges Kation und
R ein geradkettiger oder verzweigter Alkylrest mit 4 bis 22 C-Atomen ist.

6. Thermoplastische Formmasse nach einem der Ansprüche 1 bis 4, dadurch gekennzeichnet, daß der ionische Dispergator einem Salz eines Phosphonocarbonsäureesters der Formel 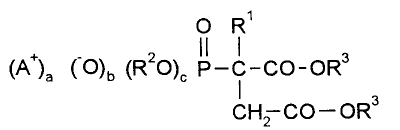 entspricht,
wobei
a und b zwischen 0,5 und 1,5 liegt,
c = 2 - b ist,
A⁺ ein einwertiges Kation,
R¹ ein Wasserstoff- oder geradkettiges oder verzweigter, gegebenenfalls substituierter Alkylrest mit 1 bis 26 C-Atomen und
R² und R³ unabhängig voneinander Wasserstoff- oder ein geradkettiger oder verzweigter Alkylrest mit 1 bis 22 C-Atomen ist.

7. Thermoplastische Formmasse nach einem der Ansprüche 1 bis 4, dadurch gekennzeichnet, daß der ionische Dispergator ein Salz der Phosphonsäure der Formel 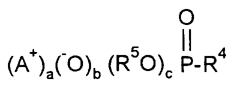 ist,
wobei
a und b = 0,5 bis 1,5 sind,
c = 2 - b ist,
A⁺ ein einwertiges Kation,
R⁴ ein geradkettiger oder verzweigter Alkylrest mit 4 bis 22 C-Atomen und
R⁵ ein Wasserstoff- oder geradkettiger oder verzweigter Alkylrest mit 1 bis 22 C-Atomen ist.

8. Verfahren zur Herstellung beschichteter, als Bestandteil von thermoplastischen Formmassen gemäß Anspruch 1 bis 7 geeigneter Keramikpulver, dadurch gekennzeichnet, daß eine Suspension des Keramikpulvers in einer polaren Flüssigkeit mit mindestens einem ionischen, nichtionischen oder zwitterionischen Dispergator auf organischer oder organometallischer Basis vermischt und anschließend getrocknet wird.

9. Verfahren nach Anspruch 8, dadurch gekennzeichnet, eine wäßrige Suspension des Keramikpulvers mit einer wäßrigen Lösung oder Emulsion des Dispergators vermischt und anschließend getrocknet wird.

10. Verfahren zur Herstellung beschichteter als Bestandteil von thermoplastischen Formmassen gemäß Anspruch 1 bis 7 geeigneter Keramikpulver, dadurch gekennzeichnet, daß das Keramikpulver durch Mahlen erhalten und der Dispergator beim Mahlen des Keramik-Pulvers zugesetzt wird.

11. Verfahren zur Herstellung von Keramik-Formkörpern durch Vermischen mindestens eines keramischen Pulvers mit thermoplastischen Bindemitteln, (thermo-)plastisches Verformen der erhaltenen Masse und Sintern, dadurch gekennzeichnet, daß das keramische Pulver vor dem Vermischen mit dem thermoplastischen Bindemittel mit Dispergatorsubstanzen behandelt wird.
